(19) Europäisches Patentamt
European Patent Office
Office européen des brevets

(11) **EP 4 224 860 A1**

(12) **EUROPEAN PATENT APPLICATION**

(43) Date of publication:
**09.08.2023 Bulletin 2023/32**

(21) Application number: **22179065.2**

(22) Date of filing: **14.06.2022**

(51) International Patent Classification (IPC):
*H04N 19/42* (2014.01)   *H04N 19/503* (2014.01)
*H04N 19/85* (2014.01)   *G06N 3/04* (2023.01)
*G06N 3/08* (2023.01)

(52) Cooperative Patent Classification (CPC):
**H04N 19/503; G06N 3/044; G06N 3/045;**
**H04N 19/42; H04N 19/85;** G06N 3/084

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **08.02.2022 GR 20220100125**

(71) Applicant: **iSize Limited**
**London**
**E1W 3NX (GB)**

(72) Inventors:
• **CHADHA, Aaron**
 **London (GB)**
• **ANDREOPOULOS, Ioannis**
 **London (GB)**
• **TREDER, Matthias**
 **London (GB)**
• **LIM, Jia-Jie**
 **London (GB)**

(74) Representative: **Abel & Imray LLP**
**Westpoint Building**
**James Street West**
**Bath BA1 2DA (GB)**

(54) **PROCESSING A TIME-VARYING SIGNAL USING AN ARTIFICIAL NEURAL NETWORK FOR LATENCY COMPENSATION**

(57) A method of processing a time-varying signal in a signal processing system. Data representative of one or more first time samples of the signal is received at an artificial neural network, ANN. The received data is processed using the ANN to generate predicted data representative of a second time sample of the signal, the second time sample being later than the one or more first time samples. The ANN is trained to predict data representative of time samples of signals based on data representative of earlier time samples of the signals. The signal processing system processes the predicted data representative of the second time sample in place of a third time sample of the signal, the third time sample being earlier than the second time sample.

1100

Receive, at an ANN, data representative of
one or more first time samples

1110

Process the received data, using the ANN, to
generate predicted data representative of a
second time sample, later than the one or
more first time samples

1120

Process the predicted data representative of
the second time sample in place of a third
time sample of the signal, earlier than the
second time sample

1130

Fig. 11

EP 4 224 860 A1

**Description**

Technical Field

The present disclosure concerns computer-implemented methods of processing a time-varying signal in a signal processing system. The disclosure is particularly, but not exclusively, applicable where the signal comprises image data and/or video data.

Background

In a signal processing system, signal data, such as image or video data, may be encoded by an encoder, e.g. at a first location, and subsequently transmitted to a decoder, e.g. at a second location, for decoding and reproduction of the signal data. Latency is a factor which can affect performance and/or usability of such a system. The characteristics of a particular signal processing system (and how a signal is processed by the system) affects the latency in the system. Latency may occur and/or be compounded, for example, during preprocessing, encoding, transmission (e.g. due to network latency), receiving, decoding, postprocessing, reconstructing and/or otherwise processing the signal data in the signal processing system. Noticeable delays in signal processing between a transmitting side and a receiving side, for example in a live video conferencing application, can impair user experience.

Known approaches for latency reduction involve analysing the encoding, transmission and decoding pipeline in order to find ways of reducing a critical path, or proposing algorithmic changes which reduce encoding delays. Examples of such algorithmic changes include using only I and P frames in video encoding, or dropping transmissions of certain data in order to reduce buffering and end-to-end latency. Such methods may reduce the encoding bitrate, thereby reducing the time needed to process and transmit the signal data.

Other known approaches for reducing latency in signal processing and transmission systems include preemptive sampling of data or signals for accelerated delivery. Examples include: pre-emptive DNS caching, pre-fetching methods in hierarchical memory systems in computers, and domain-specific methods such as head motion prediction for VR/AR applications. In the latter case, the head position of a person wearing a head mounted display is pre-emptively inferred in order to render the related views faster and thereby reduce latency. Similar approaches for pre-fetching can be found in other domains such as multi-view video encoding methods. In the above-described pre-fetching approaches for latency reduction, a signal is adaptively oversampled to attempt to cache and pre-emptively encode the most likely signal samples to be of interest. Such approaches are typically lossless, and require the use of receiver-driven data (or signal) requests, where the receiver requests specific signal segments in an adaptive manner, e.g. using a back-channel from the receiver to the transmitter in order to make requests of signal segments. Such systems may be relatively complex and/or inefficient.

The present disclosure seeks to solve or mitigate some or all of these above-mentioned problems. Alternatively and/or additionally, aspects of the present disclosure seek to provide improved methods of processing signal data in a signal processing system.

Summary

In accordance with a first aspect of the present disclosure there is provided a method for processing a time-varying signal in a signal processing system to compensate for latency, the system comprising an artificial neural network, and the signal comprising a sequence of time samples, the method comprising:

    receiving, at the artificial neural network, data representative of one or more first time samples of the signal;
    processing the data representative of one or more first time samples of the signal using the artificial neural network to generate output data representative of a prediction of a second time sample of the signal, the second time sample being later in the sequence of time samples than the one or more first time samples, wherein the artificial neural network is trained to predict data representative of time samples of signals based on data representative of earlier time samples of the signals; and
    processing, by the signal processing system, the prediction of the second time sample indicated by the output data, in place of a third time sample of the signal, the third time sample being earlier in the sequence of time samples than the second time sample.

By predicting (or 'inferring') data representative of the second time sample, and then processing the predicted data in place of the third, earlier, time sample, latency in the signal processing system can be compensated for. That is, the effects of latency may be reduced. The latency that is compensated for and/or reduced may include, but is not limited to, latency in encoding, transmission, decoding, reconstructing, displaying or other processing of the signal by the signal processing system. The prediction (or 'inference') method is signal-dependent, and the predicted (or 'inferred') future values are used in place of the actual current values at each time instant. This reduces the encoding, transmission and/or decoding latency, by replacing what is currently available with what is predicted to happen in the future.

A time sample of a signal refers to one or more values of the signal at a given time (or within a given time window). In other words, the signal comprises a sampled representation of one or more samples for each time instance. For example, where the signal comprises a video, each time sample of the video may comprise one or more images, and/or the image data contained therein, e.g. pixel data. As such, in embodiments, the one or more first time samples are one or more samples of the signal corresponding to one or more first time instances, the second time sample is a sample of the signal corresponding to a second time instance, and the third time sample is a sample of the signal corresponding to a third time instance, etc. The sequence of time samples may define an initial processing order of the time samples, e.g. defining that the one or more first time samples and the third time sample are to be processed before the second time sample. The described method may involve processing a prediction of the second time sample in place of (e.g. at the position of) the third time sample in the sequence, to compensate for and/or reduce latency.

Processing the predicted data representative of the second time sample in place of the third time sample may comprise replacing the third time sample of the signal with the predicted data representative of the second time sample of the signal, for subsequent signal processing. That is, in some embodiments, the third time sample is not processed by the signal processing system at the time when it would otherwise be processed (i.e. at the position in the sequence of the third time sample). In some examples, the third time sample of the signal is processed by the signal processing system, but at a different time. In some embodiments, processing the predicted data representative of the second time sample in place of the third time sample comprises processing both the predicted data representative of the second time sample and the third time sample. In such embodiments, the predicted data representative of the second time sample is processed at the position in the sequence of the third time sample (i.e. at the time when the third time sample would otherwise be processed), rather than the position in the sequence of the second time sample.

The third time sample of the signal may be referred to as the 'current time sample' and the second time sample of the signal may be referred to as a 'future time sample', because it is later in the sequence of time samples than the current time sample.

In embodiments, the second time sample is the next successive time sample in the sequence relative to the third time sample. In alternative embodiments, the second time sample is a later time sample than the third time sample but is not the next successive time sample in the sequence. The second time sample may be identified (e.g. selected) based on a desired amount of latency compensation, e.g. derived from a characteristic of the signal processing system. The further into the future the second time sample is relative to the third time sample, the greater the amount of latency compensation or reduction. However, there may be a trade-off between latency and distortion (or quality), since the further into the future the second time sample is relative to the third time sample, the greater the likely difference between the values of the third time sample and the values of the prediction of the second time sample, and therefore the greater the amount of signal distortion or loss. The latency-distortion trade-off may be explored adaptively. For example, the second time sample may be selected based on the relative importance of latency reduction vs quality in a given system, and/or on an inherent amount or level of latency in the system.

In embodiments, the signal processing system comprises an encoder and a decoder, where the encoder is configured to transmit an encoded bitstream to the decoder, e.g. via a transmission path. In other embodiments, the signal processing system comprises only the encoder or only the decoder. That is, the presently described methods may be performed at an encoder, at a decoder, or both. Alternatively, the methods may be performed at an intermediate entity in the transmission path between the encoder and the decoder. As such, the signal processing system may comprise neither the encoder nor the decoder in some cases. Any one or more of the encoder, decoder, or intermediate entity may comprise the artificial neural network, according to embodiments.

In embodiments, data representative of a given time sample comprises the signal data of the given time sample, e.g. the value(s) of the signal at a particular time instant. However, the data representative of the given time sample may alternatively be an approximation of the actual signal data, or data derived using the signal data. In some embodiments, the data representative of a given time sample comprises one or more values of a latent representation of the given time sample. Such a latent representation comprises a set of features representative of the content of the given time sample of the signal, and may be more compact and/or have a lower dimensionality than the actual signal data of the given time sample. Latent representations of time samples are described in more detail below.

By using a trained artificial neural network (ANN) to predict data representative of future signal values, the prediction process is learnable, e.g. by using stochastic gradient descent applied in a training phase on input training data. Such training data may be application or domain specific (e.g. video surveillance, industrial or 'Internet of Things' monitoring, video gaming, conversational services, audio or speech signals, time-varying graphics, time-varying unstructured data such as spike events, etc.). Training the ANN may involve, for example, comparing predicted future values of input signals with actual future values of the input signals, and minimising one or more losses accordingly. The use of ANN architectures also allows for the use of auxiliary signals (as described in more detail below) to improve the prediction accuracy. Further, since the use of predicted future time samples in place of current time samples incurs a distortion (i.e. a loss of quality), the use of ANNs allows for multiple architectures to be trained for multiple quality-latency trade-offs, thereby improving the flexibility and/or versatility of the signal processing system. For example, a first ANN architecture may be trained to achieve a relatively high amount latency compensation (e.g. for a signal processing system having high latency, e.g. due to a bandwidth restriction), with a relatively high loss of quality, and a second ANN architecture may be trained to achieve a lower amount of latency compensation (e.g. for a signal processing system having lower latency) with a lower loss of quality.

Unlike known methods related to latency reduction and/or temporal prediction, the presently described methods involve a signal-adaptive prediction of future signal values and then uses these predicted future signal values for encoding, transmission and/or decoding instead of the current signal values. This allows a trade-off to be explored and/or optimised between signal distortion incurred from the inference of future signal values on the one hand, and latency reduction achieved when using these future signal values instead of the current signal values on the other hand. The flexibility and/or adaptability of the system is therefore improved.

Some known methods use temporal prediction in images or video using signal-adaptive predictors, such as video frame adaptive motion estimation or temporal filtering, to predict values of the input signal at the current time instant based on future or past signal values or structures. For example, a current video frame may be predicted based on past or future frames that have already been delivered to a receiver/decoder, and an encoder encodes and transmits the residual error of the prediction. Such image/video prediction may use deep neural network architectures in some cases. However, the use of signal-adaptive prediction in such known methods is for the purpose of reducing transmission bitrate requirements (e.g. because a residual is transmitted, rather than the actual signal data), or to infer actions in robotics or other applications, such as object tracking. Unlike the presently described methods, the known methods do not derive estimates of future signal values in order to encode, transmit, decode and/or display these estimates of future signal values instead of the current signal values, thereby to compensate for latency in a signal encoding and transmission system, optionally at the cost of some distortion from the use of predicted signal data instead of actual signal data.

Further, unlike known methods of latency reduction that involve pre-emptive sampling (or pre-fetching) of data, the methods described herein do not require a back-channel from the receiver to the transmitter in order to make requests of signal segments. The presently described methods are thus more efficient and/or less complex to implement than such known methods. Known pre-emptive sampling methods also do not involve signal-adaptive inference to directly predict and use future signal values in a signal-adaptive manner, as opposed to merely over-sampling. Additionally, the presently described methods predict approximate (or lossy) versions of future signal samples (e.g. because the prediction is performed before the actual future samples themselves are available), and therefore some distortion may be incurred, which may be balanced against the reduction in latency achieved. This is in contrast from known pre-emptive sampling methods, which are lossless methods of oversampling, thus not incurring any latency-distortion trade-offs.

In embodiments, the signal comprises a video (or multiple videos), and the sequence of time samples of the signal comprises a set of images, e.g. video frames. In alternative embodiments, the signal comprises another type of signal, such as an audio and/or speech signal, a graphics signal, or a signal representing 1D, 2D, 3D or unstructured data series such as point clouds or animation grids. Such examples may be non-uniformly sampled in time, but can be grouped into uniformly sampled feature sets, e.g. by using graph signal processing methods.

In embodiments, the processing the predicted data representative of the second time sample of the signal comprises encoding, at an encoder device, the predicted data in place of the third time sample of the signal. That is, the predicted data generated by the ANN (or a prediction of the second time sample generated using the predicted data generated by the ANN) may be encoded at the time at which the third time sample of the signal would otherwise be encoded, e.g. instead of the third time sample of the signal. This compensates for latency associated with encoding, transmission and/or decoding in the signal processing system.

In embodiments, the processing the predicted data representative of the second time sample of the signal comprises transmitting, to a decoder device, the predicted data in place of the third time sample of the signal. That is, the predicted data generated by the ANN (or a prediction of the second time sample generated using the predicted data generated by the ANN) may be transmitted at the time at which the third time sample of the signal would otherwise be transmitted, e.g. instead of the third time sample of the signal. This further compensates for latency associated with encoding, transmission and/or decoding in the signal processing system. The predicted data representative of the second time sample may be transmitted in a compressed format, in some examples.

In embodiments, the processing the predicted data representative of the second time sample of the signal comprises decoding, at a decoder device, the predicted data in place of the third time of the signal. That is, the predicted data generated by the ANN (or a prediction of the second time sample generated using the predicted data generated by the ANN) may be decoded at the time at which the third time sample of the signal would otherwise be decoded, e.g. instead of the third time sample of the signal. This also compensates for latency associated with encoding, transmission and/or decoding in the signal processing system.

In embodiments, processing the predicted data representative of the second time sample comprises processing, in place of the third time sample of the signal, a prediction of the second time sample of the signal indicated by the predicted data. For example, processing the predicted data may comprise generating, from the predicted data, a prediction of the second time sample to use in place of the third time sample. Such a prediction may comprise predicted signal data, e.g. predicted pixel data. For example, where the predicted data generated by the ANN comprises predicted values of a latent representation of the second time sample, processing the predicted data may comprise an expansion from the latent representation domain to a signal data domain. In embodiments, the processing the predicted data representative of the second time sample in place of the third time samples comprises: first processing the predicted data to generate a prediction of the second time sample of the signal; and second processing the generated prediction of the second time sample in place of the third time sample. In alternative embodiments, the predicted data generated by the ANN comprises predicted signal data.

In embodiments, the data representative of the one or more first time samples of the signal is received from an encoder device. For example, the data representative of the one or more first time samples may be received as an encoded bitstream, to be processed at the decoder or at an intermediate entity between the encoder and the decoder. In alternative embodiments, for example where the method is performed at least in part at the encoder, the data representative of the one or more first time samples may be received from another source, e.g. a signal generator, one or more sensors, a memory or other storage medium, an upstream signal processing entity, an upstream part of the encoder, etc.

In embodiments, the one or more first time samples include the third time sample. That is, the one or more first time samples may include the current time sample (i.e. the third time sample). In other embodiments, the one or more first time samples do not include the third time sample. For example, the one or more first time samples may include time samples earlier than the third time sample but not the third time sample itself. The one or more first time samples may comprise a single time sample, which may or may not be the third time sample, or a plurality of time samples, which may or may not include the third time sample. As such, the ANN is trained to predict data representative of future time samples based on: data representative of the current time sample; or data representative of one or more time samples earlier than the current time sample; or data representative of both the current time sample and one or more earlier time samples, according to embodiments.

In embodiments, the artificial neural network comprises a recurrent neural network (RNN). Recurrent neural networks are able to exhibit temporal dynamic behaviour, e.g. by using their internal state (or memory) to process sequences of inputs. The RNN may comprise a finite or an infinite impulse recurrent network. In embodiments, the RNN comprises feedback connections. In embodiments, the RNN includes at least one long short-term memory unit (LSTM). LSTMs may be particularly well-suited to processing and/or making predictions based on time series data, such as that of a time-varying signal, as there may be lags of unknown duration between events in a time series. In alternative embodiments, the ANN comprises a transformer neural network including an attention function. A transformer network is able to differentially weight the significance of different parts of the input data, using an attention mechanism. Transformer networks may allow for more parallelisation than RNNs and therefore an increase in efficiency, e.g. in training. Both transformer networks and LSTMs ensure long-term and short-term dependencies are captured and utilized appropriately for the prediction of future values of time-varying signals. In particular, LSTMs and transformers can find an optimal balance between short-term and long-term dependencies by the intelligent design and parameter tuning of the internal non-linearities of each neuron (or cell) of each layer.

In embodiments, the second time sample is identified from the sequence of time samples of the signal based on a received latency characteristic of the signal processing system. Such a latency characteristic may comprise a latency characteristic of one or more of the encoder, the decoder, and the transmission path (e.g. network) between the encoder and the decoder. For example, the latency characteristic may relate to a bandwidth or data rate of the transmission path. Identifying the second time sample comprises selecting which future time sample of the signal is to be predicted by the ANN, in other words how many time samples should separate the second (i.e. future) time sample from the third (i.e. current) time sample. The number of time samples separating the second time sample from the third time sample may be adjusted by the system dynamically, e.g. based on updated latency characteristics and/or preferences. For example, such adjustments may be based on measurements of network fluctuations, data transfer delays, etc. This improves the flexibility and/or adaptability of the system, as the system can respond to changing latency conditions and/or requirements. This can be considered as a joint minimization problem, where latency is minimized or reduced towards a target value, while at the same time the signal distortion or information loss incurred from the use of predicted future signal values instead of actual signal values is minimized.

In embodiments, signal data of the second time sample of the signal is received. For example, where the signal comprises a series of images, the received signal data may comprise pixel data, e.g. one or more values for each pixel in a given image. Such signal data of the second time sample of the signal may be received after the predicted data representative of the second time sample is obtained and/or used in place of the third time sample of the signal. In some such embodiments, the signal data of the second time sample of the signal is processed, using the ANN, in place of the predicted data representative of the second time sample of the signal, to obtain predicted data representative of a fourth time sample of the signal. The fourth time sample is later in the sequence of time samples than the second time sample. Accordingly, when the actual signal data for the second time sample becomes available, the actual signal data is used instead of the prediction of the second time sample to predict further future time samples of the signal. This increases the accuracy of the prediction of the fourth time sample, since actual signal data is used instead of a prediction of such.

In embodiments, the processing the received data using the ANN is based on auxiliary information derived from one or more of: audio data, data representing motion and/or vibration in a region where the signal is captured, and data indicating objects and/or structures represented in the signal. The use of such auxiliary information increases the accuracy of the prediction performed by the ANN, e.g. by providing contextual data. For example, where the auxiliary information is derived from motion data, the predicted future time sample of the signal takes such motion into account, for example by applying motion vectors to the values of current or past time samples. Such auxiliary information may also be provided during training of the ANN, to improve the accuracy and/or performance of the trained ANN.

In embodiments, the predicted data generated by the ANN comprises a predicted value of a latent representation of the second time sample of the signal, the latent representation comprising a set of signal features representative of the second time sample of the signal. In such embodiments, the ANN is trained to predict values of latent representations of time samples of signals based on values of latent representations of earlier time samples of the signals. This increases the efficiency of the prediction process. This is because typical signals of interest, such as images or video frames, may be very high-dimensional for each time instant (e.g. millions of pixels per frame). Such signals may also be noisy, in that changes between local areas of pixel-domain video segments can appear to be random due to sensor noise, camera flicker, or random illumination or scene changes in local areas. By training the ANN to perform predictions in a more compact latent representation (i.e. comprising a set of latent signal features representative of the content of the signal), rather than directly on actual signal data, the prediction of future time samples is made more efficient. Signal dimensionality may be significantly reduced through use of the latent representation (e.g. the latent representation may comprise vectors of 256 elements or fewer for video frames comprising millions of pixels) and it is therefore possible to carry out prediction of future latent vectors using smaller ANN architectures with increased effectiveness and/or efficiency.

Additionally, in embodiments where the predicted data comprises a predicted value of a latent representation, downstream processing by the signal processing system is made more efficient. For example, where the prediction is performed at the encoder, the predicted values of the latent representation may be encoded and transmitted to the decoder instead of the predicted signal data. This uses less data and/or processing resources, reduces latency and/or reduces bitrate requirements compared to a case in which the latent representation is not used.

In embodiments, signal data of the one or more first time samples of the signal is received. The signal data of the one or more first time samples may be transformed into latent representations of the one or more first time samples, and the latent representations of the one or more first time samples may be inputted to the ANN. Transforming input signal data into more compact latent representations allows for more efficient processing, e.g. at the ANN. The signal data may be transformed into latent representations using one or more neural network architectures, as described below. The use of neural networks makes the production of the latent representations learnable based on input training data from the particular domain of interest, by using stochastic gradient descent during a training phase to produce a set of trained neural networks for deployment.

In embodiments, for each of the one or more first time samples of the signal, transforming the signal data into the latent representation comprises: first processing the signal data at a first encoder to generate a first data structure representative of the time sample of the signal; and second processing the signal data at a second encoder to generate a second data structure representative of the time sample of the signal. The first data structure comprises a signal element identifier identifying at least one signal element included in the time sample of the signal. The signal element identifier is invariant to changes in the configuration of the at least one signal element between different time samples that include the at least one signal element. The second data structure comprising values indicating the configuration of the at least one signal element in the time sample of the signal. In embodiments, for each of the one or more first time samples of the signal, the latent representation comprises the first data structure and the second data structure.

As such, the signal data of the time sample of the signal is mapped onto a latent representation embodied by a low-dimensional vector representing the content of the signal data. This mapping is invariant to changes in irrelevant features of the input, such as viewpoint, background changes, lighting, etc. At the same time, such a mapping is class-unique. That is, two different signal elements map onto two different latent representations (e.g. identifiers) unless both elements are representing near-identical signal elements (e.g. two photographs of the same person but with different clothes or glasses).

In embodiments where the time sample of the signal is an image, a signal element may be an element of a scene depicted in the image. For example, such a signal element may be an object, a collection of objects, or another semantically consistent region, which may or may not be amorphous, for example the sky depicted in an image, parts of the background or foreground texture of an image, or the like.

The first encoder may be referred to as a 'signal identity' encoder, because it is configured to assign a different identifier to each unique element of a signal. As such, the first encoder provides an indicator of the identity of a particular element included in the time sample of the signal. For example, where the time sample is an image, the first encoder may provide an indicator of the identity of a particular scene element (e.g. one or more objects) depicted in the image.

The second encoder may be referred to as a 'structure extraction' encoder, because it is configured to extract structural details (e.g. characteristics indicating the configuration of the at least one signal element in the time sample of the signal) from the signal data that are not captured by the first encoder. In examples where the time sample is an image, such structural details may be visual characteristics, and the second data structure generated by the second encoder may comprise values for one or more visual characteristics associated with a scene element (i.e. a signal element) depicted in the image. Taken together, the first and second data structures provide sufficient information for an accurate approximation of the structural aspects of the original signal content.

The processing of the signal data by the first encoder may be followed by the processing by the second encoder. However, it will be appreciated that in embodiments, the processing by the first encoder and second encoder may be entirely independent. In embodiments, either the first encoder or the second encoder may process the signal data first, or in embodiments both may process the signal data in parallel.

In embodiments, the first encoder comprises an artificial neural network, for example a convolutional neural network (CNN). The second encoder may also comprise such an artificial neural network, as discussed further below. Advantageously, such a neural network comprises multiple layers having a convolutional architecture, with each layer being configured to receive the output of one or more previous layers. Such an artificial neural network may comprise a set of interconnected adjustable weights and activation functions. In embodiments, the outputs of each layer of the neural network are passed through a non-linear parametric linear rectifier function, pReLU. Other non-linear functions may be used in other embodiments.

In embodiments, the first encoder is configured to use a differentiable loss function, for example a triplet loss function. This enables the first encoder to learn how to map signal elements to identifiers so as to simultaneously enable invariance (to viewpoint and other details) and identity.

In embodiments, the second encoder comprises an artificial neural network, e.g. a convolutional neural network, configured to output a vector comprising the values of the one or more characteristics. In embodiments, the second encoder is configured to determine details of the time sample to which the signal data corresponds that are not captured by the first processing at the first encoder. As such, the second data structure produced by the second encoder complements the first data structure produced by the first encoder. Taken in combination, the first and second data structures may provide enough information to a decoder (in a compact format) to allow the decoder to generate an acceptable approximation of the time sample of the signal. The first and second encoders may be trained separately or simultaneously.

In embodiments, transforming the signal data into the latent representation comprises preprocessing the signal data to identify a subset of the signal data corresponding to a region of interest of the time sample of the signal. For example, where the time sample of the signal comprises an image, the preprocessing may identify a subset of pixel data corresponding to a region of interest in the image. The first processing using the first encoder and the second processing using the second encoder may then be performed on the identified subset of the signal data. In such embodiments, the signal element identifier identifies a signal element included in the region of interest. For example, the signal element identifier may identify a scene element, i.e. an element of a scene depicted in the region of interest.

In embodiments, the preprocessing is performed by an artificial neural network, e.g. a CNN, trained to identify regions of interest in time samples of signals. Where a time sample of a signal comprises an image, such a CNN may output a preprocessed image along with bounding box coordinates or segmentation maps, or a single masked preprocessed image, for example, indicating the size and/or position of the identified region of interest. Such a preprocessed image may comprise only a subset of pixel data corresponding to the region of interest, or may comprise the entirety of the pixel data for the image, but indicating the region corresponding to the subset of pixel data. The preprocessing CNN may be fully learnable and its weights may be adjusted via gradient descent based on loss functions further downstream (e.g. based on reconstructed time samples of signals).

As mentioned above, the signal element identifier is invariant to changes in the configuration of the signal element in the input time sample. That is, its corresponding signal element may have different orientations, positions, appearances, and/or may be depicted in different lighting, with different backgrounds, etc., in different time samples of the signal. Regardless of the particular configuration and/or characteristics associated with a signal element in a given time sample of the signal, the same signal identifier is assigned to the signal element. This may be achieved, for example, by training the first encoder using multiple time samples including a given signal element (e.g. multiple images depicting a given object) under different configurations and/or characteristics. As such, the signal element identifier is both unique to the signal element itself and invariant to the particular configuration of the signal element in the time sample of the signal.

In embodiments, the second encoder is configured to determine the one or more characteristics (e.g. visual characteristics) whose values are to be included in the second data structure. Such a determination may be based on the identity of the signal element, e.g. as determined by the first encoder. As such, the one or more characteristics may be specific to the signal elements(s) included in the time sample of the signal. For example, where the time sample is an image and the signal element is a car depicted in the image, the one or more characteristics may include a location in the image of the wheels and/or trunk of the car, a licence plate number of the car, etc. Where the signal element is or relates to a human face, in contrast (and optionally the face of a particular individual), the one or more characteristics may include the location and/or movement of facial features such as eyebrows and mouth, hand movements, posture, etc. Therefore, the second encoder may be configured to extract only details from the signal data that are relevant to the signal element(s) in question (and not details that are not relevant), and to include such details in the second data structure. In embodiments, the first encoder is configured to determine the one or more characteristics.

In embodiments, the second encoder is configured to determine the one or more characteristics by identifying features of the time sample of the signal which are structurally and/or visually salient. Such salient features may be specific to (and dependent on) the signal element(s) included in the time sample of the signal. In embodiments, the one or more characteristics do not comprise or relate to features of the time sample of the signal which are determined not to be structurally and/or visually salient. Encoding only the salient (e.g. noticeable) characteristics of the time sample of the signal facilitates an accurate reproduction (or approximation) of the time sample of the signal, whilst reducing the amount of data used to represent the content of the time sample of the signal.

In embodiments, the signal element identifier is indicative of generic structural characteristics of the content of the signal data of the time sample of the signal in comparison to other time samples of the or other signals. Such generic structural characteristics are sufficient to identify what is depicted in the time sample of the signal, e.g. the at least one signal element, but do not describe how such signal elements are configured. This is in contrast with the values of the one or more characteristics comprised in the second data structure, which may be indicative of more specific (or fine-grained) characteristics of the content of the time sample of the signal, and which describe how the signal elements are configured in the time sample.

By processing the signal data using the first and second encoders, compact representations of the time sample of the signal can be produced (namely the first and second data structures), which can then be used to process the time sample more efficiently, e.g. to predict future time samples of the signal. The first and second data structures may be significantly smaller, in terms of the amount of data used, stored and/or transferred, than the signal data itself. For example, where the method is applied to a streaming video application (where each frame of the video is processed in the above-described manner), outputting the first and second data structures may correspond to a few kilobits-per-second, which is less than the amount of data required to process, transmit and/or store the signal data for the video itself. The first and second data structures may therefore be referred to as 'compact representations' of the content of the signal, in comparison to the signal data itself.

As mentioned above, a prediction of the second time sample of the signal may be generated using one or more predicted values of a latent representation of the second time sample. Such generating may involve an expansion from the latent representation domain to a signal data (e.g. predicted pixel data) domain. The prediction of the second time sample may be generated at the decoder, although in alternative embodiments the prediction of the second sample is generated at the encoder or at an intermediate entity between the encoder and the decoder. In embodiments, the prediction of the second time sample is generated using an ANN trained to generate time samples of signals using the outputs of the first and second encoders (i.e. the first and second data structures of the latent representation). Such an ANN may be trained offline based on offline training outputs of the first and second encoders, and adjusted such that time samples of signals are generated which resemble the training input time samples.

In embodiments, the ANN architectures that perform signal generation (i.e. expansion from the latent representation) are trained using generative adversarial neural networks in conjunction with stochastic gradient descent based back-propagation and a range of loss functions, including but not limited to: generative adversarial neural network losses, loss functions corresponding to mathematical norms of the signal reconstruction error from the prediction in the compact latent representation, structural losses like gradients or gradients in a signal transform space, and losses combining a variational autoencoder reconstruction error. This further increases the efficiency and/or performance of the system.

In embodiments, the first encoder and/or the second encoder (which may each comprise an artificial neural network) are trained using back-propagation of errors based on a comparison between input signals and signals generated using the first and second data structures outputted from the first and second encoders. For example, the weights and/or activation functions of the first encoder and/or second encoder can be adjusted to minimize one or loss functions relating to such generated signals. This enables the first encoder and/or the second encoder to produce data structures which facilitate more accurate signal generation (e.g. a more accurate reproduction of the original input signals). The generated signals may comprise approximations of the original signals. For example, where the input signals comprise image sequences, the signals generated from the first and second data structures may comprise photorealistic approximations resembling the structures and/or visual characteristics of the input images (e.g. in a visually acceptable manner), but not exact reconstructions of the input images. Such approximations depict the signal element identified by the signal element identifier comprised in the first data structure in accordance with the values of the one or more characteristics (e.g. visual characteristics such as lighting, movement, perspective, etc.) comprised in the second data structure.

In embodiments, back-propagation learning uses learning rules that are deterministic or stochastic (e.g. done after averaging over batches of arbitrarily sampled inputs/outputs). Gradients can be computed on single inputs, on batches of inputs or on the whole training dataset, per training iteration. The learning parameters, such as the initial learning rate and learning rate decay, can be empirically tuned to optimize speed of training and performance. Batches of training data can be selected in a deterministic or random/pseudo-random manner.

In embodiments, one or more components of the system (e.g. the first and/or second encoders, the ANN configured to perform prediction of future signal values, etc.) are differentiable. This allows the overall system to be trained end-to-end using back-propagation of errors and stochastic gradient descent. In embodiments, one or more components of the system are not differentiable, but other components of the system are differentiable. In embodiments, one or more components of the system comprise or use differentiable loss functions.

As mentioned above, the methods of processing signals described herein may be performed on image or video data. Such processing may be performed on a batch of video data, e.g. a complete video file for a movie or the like, or on a stream of video data. In embodiments, each of the one or more first time samples of the signal represents a portion of an image or video frame, e.g. a block or sub-region of an image.

An example application domain for the methods described herein is video conferencing, where the prediction of the second time sample of the signal can be used to generate a photorealistic representation (e.g. an avatar) of a speaker depicted in the one or more first time samples of the signal. Other application domains for the methods described herein include, but are not limited to, face meshes that comprise multiple non-uniformly sampled mesh points for each time instant, surveillance monitoring, monitoring of industrial processes, internet-of-things monitoring, video gaming, conversational services, video communications, video streaming, video monitoring in autonomous vehicle, traffic monitoring, or audio/speech signals.

In accordance with another aspect of the disclosure there is provided a method for processing a time-varying signal in a signal processing system to compensate for latency, the system comprising an artificial neural network, and the signal comprising a sequence of time samples, the method comprising:

receiving, at the artificial neural network, data representative of one or more first time samples of the signal;

processing the data representative of one or more first time samples of the signal using the artificial neural network to generate output data representative of a prediction of a second time sample of the signal, the second time sample being later in the sequence of time samples than the one or more first time samples, wherein the artificial neural network is trained to predict data representative of time samples of signals based on data representative of earlier time samples of the signals; and

processing, by the signal processing system, the prediction of the second time sample indicated by the output data, in place of a third time sample of the signal, the third time sample being earlier in the sequence of time samples than the second time sample.

In accordance with another aspect of the disclosure there is provided a computing device comprising:

a processor; and
memory;
wherein the computing device is arranged to perform using the processor any of the methods described above.

In accordance with another aspect of the disclosure there is provided a computer program product arranged, when executed on a computing device comprising a processor or memory, to perform any of the methods described above.

It will of course be appreciated that features described in relation to one aspect of the present disclosure described above may be incorporated into other aspects of the present disclosure.

Description of the Drawings

Embodiments of the present disclosure will now be described by way of example only with reference to the accompanying schematic drawings of which:

Figure 1 is a schematic workflow diagram showing an example of a signal processing system in accordance with embodiments;
Figure 2 is a schematic workflow diagram showing an example of signal processing in accordance with embodiments;
Figures 3(a) to 3(c) are schematic diagrams showing a neural network in accordance with embodiments;
Figure 4 is a schematic diagram showing a neural network in accordance with embodiments;
Figure 5 is a schematic diagram showing a recurrent neural network layer in accordance with embodiments;
Figure 6 is a schematic diagram showing a long short-term memory neural network layer in accordance with embodiments;
Figure 7 is a schematic workflow diagram showing an example of signal processing in accordance with embodiments;

Figure 8 is a schematic diagram showing an example of signal processing in accordance with embodiments;
Figures 9(a) to 9(e) are schematic diagrams showing examples of signal preprocessing in accordance with embodiments;
Figure 10 is a schematic workflow diagram showing an example training process in accordance with embodiments;
Figure 11 is a flowchart showing the steps of a method for processing a time-varying signal in accordance with embodiments; and
Figure 12 is a schematic diagram of a computing device in accordance with embodiments.

Detailed Description

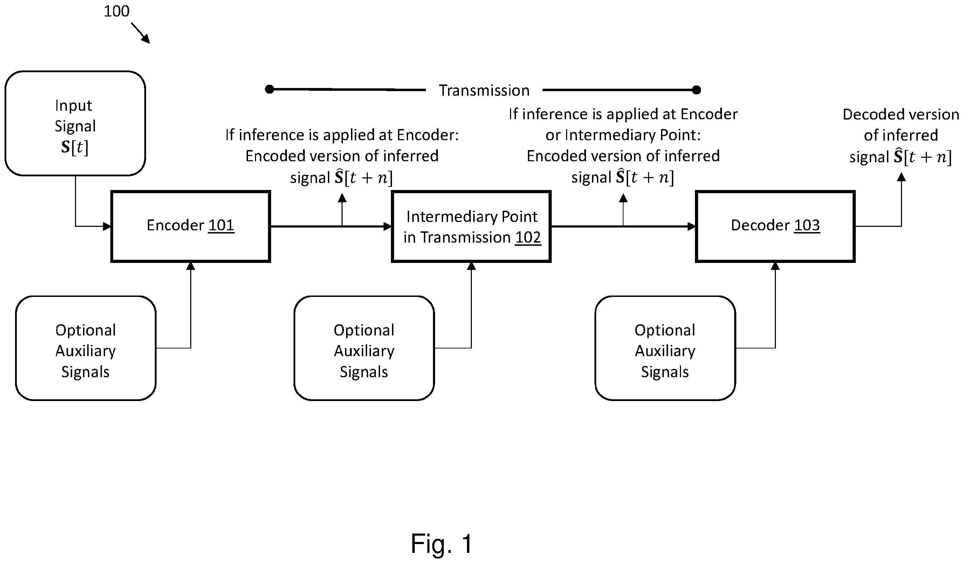

Figure 1 is a schematic diagram showing an example of a signal processing system 100, according to embodiments.

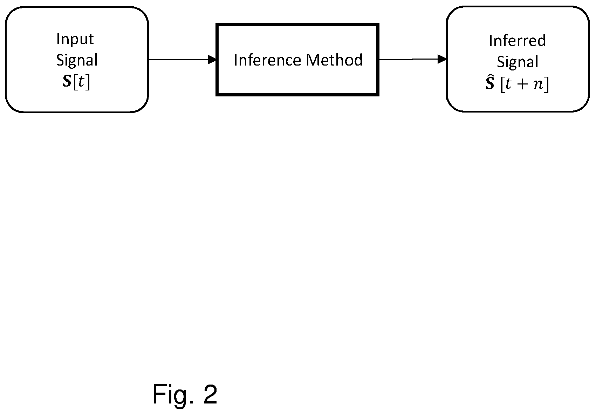

The signal processing system 100 includes an encoder 101, an intermediate entity 102, and a decoder 103. The intermediate entity 102 is arranged between the encoder 101 and decoder 103, e.g. in a transmission path between the encoder 101 and the decoder 103. The intermediate entity 102 may be configured to decode, process, and re-encode signal data. One or more of the encoder 101, intermediate entity 102 and decoder 103 may be configured to perform the methods described herein, to compensate for latency in the signal processing system 100. As will be described in more detail below, such methods involve receiving values of a signal up to time t (i.e. present and/or past time samples of the signal), predicting using an artificial neural network, ANN, future time samples of the signal (e.g. corresponding to time $t + n$, where $n > 0$), and using such predicted future time samples in place of the present time sample t for subsequent signal processing. This process is shown schematically in Figure 2. The use of hat notation ($\hat{\mathbf{S}}$) indicates a predicted future time sample, as opposed to a time sample of the signal that was actually obtained (denoted by $\mathbf{S}$), e.g. by a sensor.

In embodiments, the encoder 101 and/or the decoder 103 are adapted to perform such prediction methods. That is, one or both of the encoder 101 and the decoder 103 may comprise an ANN trained to predict future time samples of signals. In alternative embodiments, however, for example where the methods described herein are performed at the intermediate entity 102, the encoder 101 may comprise a standard encoder and/or the decoder 103 may comprise a standard decoder. For example, the encoder 101 and/or the decoder 103 may use video, audio or speech encoding standards, such as MPEG or ITU-T encoders and decoders. In other embodiments, the encoder 101 and/or the decoder 103 comprise any form of learnable or non-learnable encoding-decoding system.

As shown in Figure 1, auxiliary signals may be used as an additional input to the signal prediction process, whether such a process is performed by the encoder 101, the intermediate entity 102 or the decoder 103. The auxiliary signals may comprise audio, motion, vibration or other signals relevant to the signal of interest. Auxiliary signals are not used in some other embodiments.

In alternative embodiments, the signal processing system 100 does not include the intermediate entity 102 and/or the decoder 103. In other words, the signal processing system 100 may comprise only the encoder 101, which is configured to perform the signal processing methods described herein. In some embodiments, the signal processing system 100 does not comprise the encoder 101, but comprises only the decoder 103 and/or the intermediate entity 102.

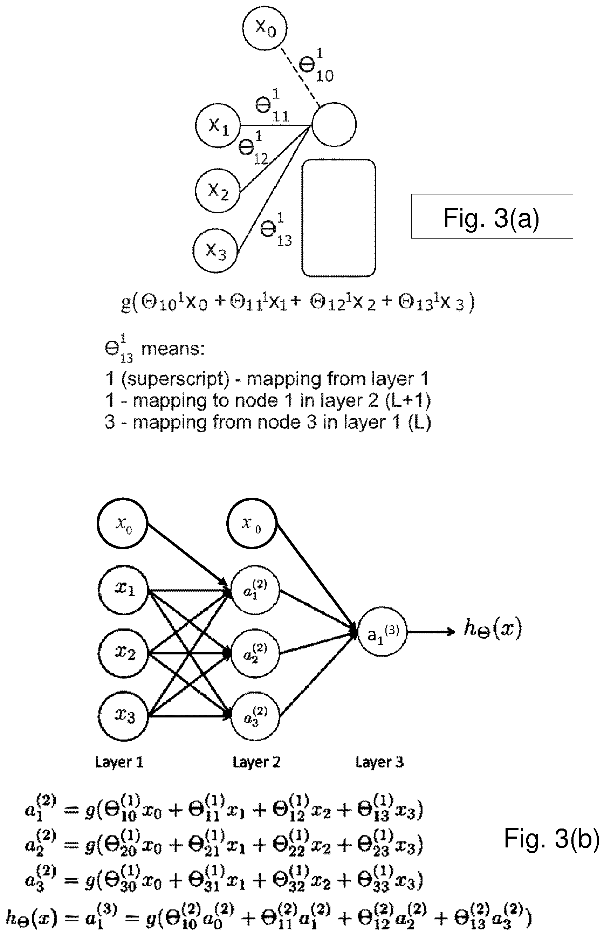

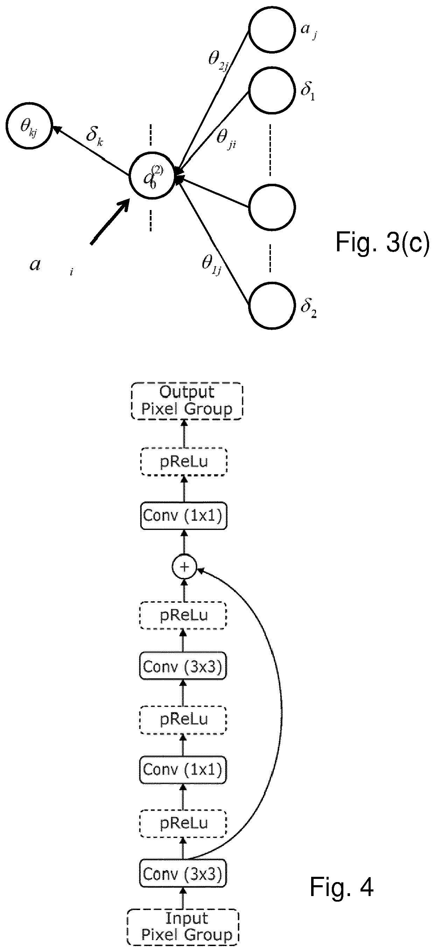

As discussed above, the prediction of data representative of future time samples of signals based on data representative of previous and/or current time samples is performed by an ANN. Such an ANN is trained using representative data, e.g. training sets of image or video data. An artificial neural network as described herein can comprise any combination of weights connected in a network and having a non-linear function (i.e. an activation function). An example of such connections and weights is shown in Figure 3(a). An example of the global connectivity between weights and inputs is shown in Figure 3(b). That is, Figure 3(a) shows a combination of inputs $x_0, ..., x_3$ with weight coefficients $\Theta$ and non-linear activation function g(), and Figure 3(b) is a schematic diagram showing layers of interconnected activations and weights, forming an artificial neural network. The activation function g() may comprise a parametric ReLU (pRELU) function. Such examples are trained with back-propagation of errors computed at the output layer, using gradient descent methods. This is shown in Figure 3(c), which depicts schematically the back-propagation of errors $\delta$ from coefficient $a_0^{(2)}$ of an intermediate layer to the previous intermediate layer using gradient descent. That is, the errors may be computed from errors of subsequent layers which, in turn, are computed ultimately from errors between network outputs and training data that are known a-priori. These latter errors between network outputs and training data are evaluated with a set of loss functions, which evaluate the network prediction error during the training process using appropriate loss or cost functions. Examples of such loss functions are described in more detail below.

In embodiments, the ANN is a convolutional neural network (CNN), e.g. consisting of a stack of convolutional blocks and stacks of layers of fully-connected neural networks of the type shown in Figure 3(b). In some embodiments, the convolutional blocks include dilated convolutions, strided convolutions, up/downscaling operations, and normalisation operations. In some embodiments, a given CNN includes a multi-resolution analysis of the image using a U-net architecture.

An example multi-layer neural network processing pipeline is shown in Figure 4. In particular, Figure 4 shows a cascade of convolutional (Conv ($k \times k$)) and parametric ReLu (pReLu) layers of weights and activation functions mapping input pixel groups to transformed output pixel groups (e.g. where a processed signal comprises one or more images). Each layer receives the representation from the previous layer. Convolutional layers extend the example of Figure 3(b) to multiple dimensions, by performing convolution operations between multi-dimensional filters of fixed kernel size ($k \times k$) with learnable weights and the inputs to the layer. In embodiments, some layers have dilated convolutions or pooling components to increase or decrease the resolution of the receptive field. The connectivity of the cascade of convolutional layers and activation functions can also include skip connections, as shown by the connection from the output of the leftmost "Conv ($3 \times 3$)" layer of Figure 4 to the summation point of Figure 4. In addition, the entirety of the cascade of multiple layers (also known as a deep neural network) is trainable end-to-end based on back-propagation of errors from the output layer backwards (e.g. as shown in Figure 3(c)), using gradient descent methods.

The output of each CNN can be either a 2D image (or 3D video) or a 1D vector of features. In the latter case the last convolutional layer is vectorised either by reshaping to 1D or alternatively by using a global pooling approach (e.g. global average pooling or global max pooling). The dimensionality of the vector is the number of channels in the last convolutional layer. If the output is 1D, the vectorisation may be followed by one or more dense layers (as shown in Figure 3(b)).

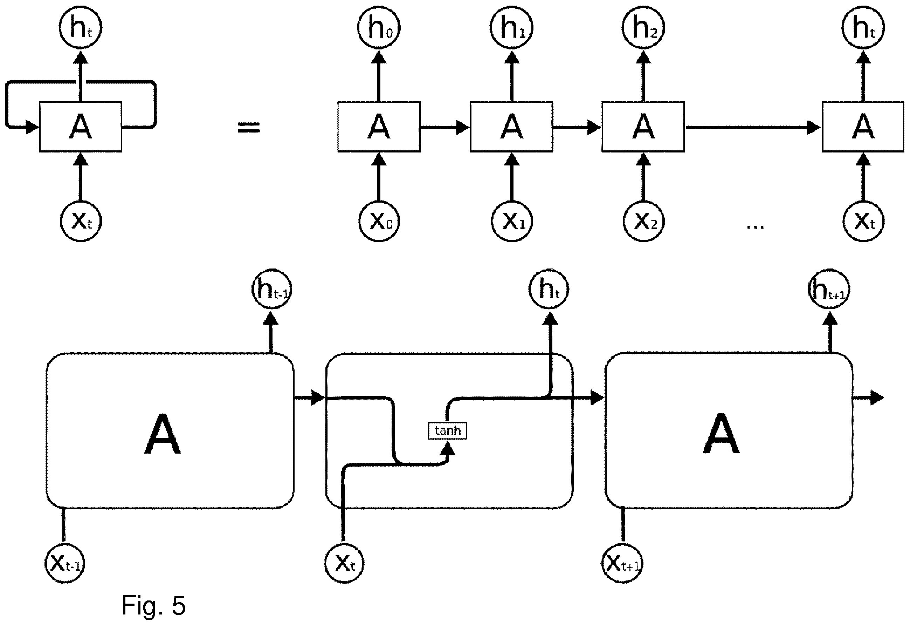

In embodiments, the ANN comprises a recurrent neural network (RNN). An example of such an RNN is shown schematically in Figure 5. In particular, the top part of Figure 5 shows a recurrent neuron linking each input sample at time $t$, $x_t$, to its output $h_t$, and the passing of the output to the next time instant (recurrency), and an unrolled version of the recursion across time. The bottom part of Figure 5 shows the inner components of a recurrent neural network, including a tanh() non-linear function processing the two inputs.

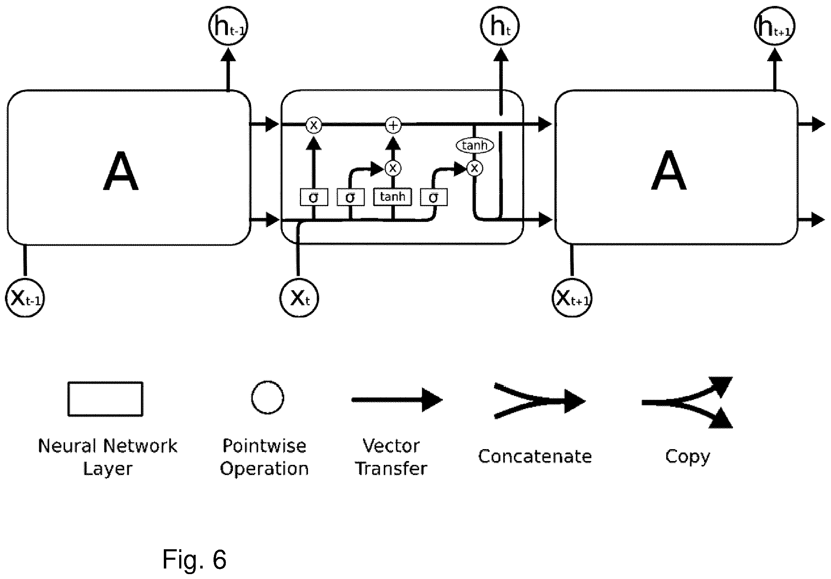

Figure 6 shows an example of an RNN comprising a long short-term memory (LSTM) neuron in a recurrent connection. In particular, three sigmoid functions $\sigma()$ and two tanh() functions are used to gate the recurrent inputs and the current time inputs for each time step of the recurrency. In alternative embodiments, a transformer network is used for future signal prediction instead of an LSTM-based RNN. Such a transformer network involves the use of a RNN with an attention module. The use of RNNs and LSTMs (or transformer networks) ensures long-term and short-term dependencies are captured and utilized appropriately for prediction of current and future values of time-varying signals. The internal non-linearities and parameters of each neuron (or cell) of each layer may be tuned to optimise the balance between short-term and long-term dependencies. LSTMs or transformers can be combined over multiple layers and thereby create a multi-layer architecture with a sufficient number of non-linearities and internal memory states that can capture sufficient information for accurate prediction of future signal values.

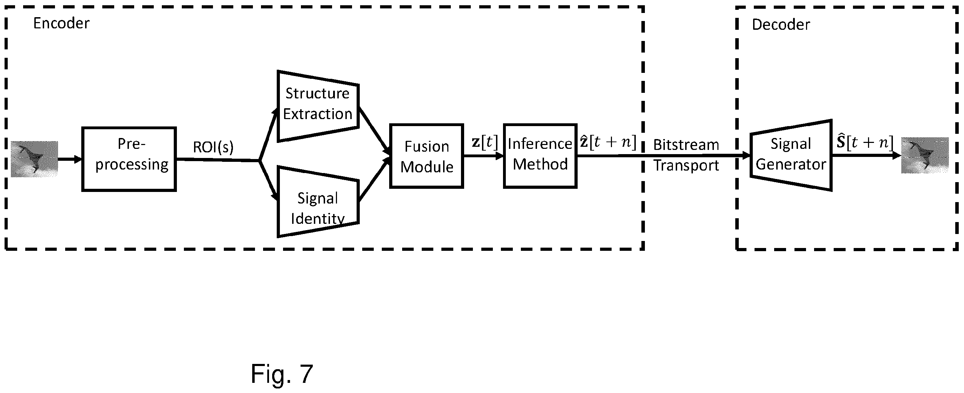

Figure 7 is a schematic diagram showing an example of signal processing, according to embodiments. In the example shown in Figure 7, the prediction of future time samples of signals is performed in a lower dimensional (i.e. latent) space. This increases the efficiency of the prediction process, as discussed above.

With reference to the example shown in Figure 7, at an encoder, signal data of a current time sample of a signal, S[t], is received at a preprocessing module, which is configured to identify a subset of the signal data corresponding to a region of interest. The subset of signal data is then passed to two encoders: a structure extraction encoder and a signal identity encoder. Each of the encoders produces a compact data structure representative of content of the region of interest. A fusion module combines the two data structures to form a latent representation of the first time sample of the signal, z[t]. The latent representation is more compact (e.g. having lower dimensionality) than the signal data itself, and therefore uses less data and is more efficient to process than the signal data. The latent representation is inputted to an inference module, which is configured to predict (i.e. infer) values of a latent representation of a future time sample of the signal, $\hat{z}$[t+n], n>0. The inference module comprises an ANN, as described above. In embodiments, the inference module predicts values of $\hat{z}$[t+n] based on the latent representations of one or more previous time samples of the signal in addition to or instead of the current time sample of the signal, e.g. z[0 ≤ t'≤t]. In embodiments, the inference module predicts values for two data structures corresponding to predicted outputs of the structure extraction encoder and the signal identity encoder, but without actually using the structure extraction and signal identity encoders to process the future time sample of the signal. The latent representation of the future time sample is packaged into a bitstream (e.g. by binarizing the latent representation) for transmission to a decoder, in place of the current time sample of the signal, S[t] or the latent representation thereof, z[t]. In alternative embodiments, the encoder does not include the fusion module and/or the preprocessing module.

At the decoder, a signal generator function receives the data structures forming the latent representation of the future time sample of the signal (optionally combined and/or in a compressed format), and uses the data structures to generate a prediction of the future time sample of the signal, $\hat{S}$[t+n], which is used in place of the current time sample of the signal, S[t]. For example, where the signal is a video signal, the prediction of the future time sample of the signal, $\hat{S}$[t+n], may be displayed at the time when the current time sample of the signal, S[t], would otherwise be displayed.

This reduces the transmission latency as the receiver receives the latent representation (or a compressed version thereof) of the estimated signal of $n$ time steps in the future. The parameter $n$ can be either be set to a constant value or be estimated on the fly using an adaptive approach. An adaptive approach may involve the sender measuring the fidelity of the prediction $\hat{z}[t+n]$ compared to the actual representation $z[t+n]$ using a loss function (e.g. L1 loss) once the $t+n$-th frame is available. If the fidelity is below a threshold value, $n$ is decreased. If it is above a second threshold value, $n$ may be increased. Alternatively, the receiver may request data corresponding to a specific value of $n$ from the sender. For instance, the receiver can take the quality or bandwidth of the transmission connection into account, requesting a lower $n$ for a high bandwidth connection and a greater $n$ for a low bandwidth connection. Due to the autoregressive nature of the prediction, a single neural network can be used to produce $z[t+n]$ for different values of $n$.

In alternative embodiments, the prediction of the future time sample of the signal, $\hat{S}[t+n]$, is generated from the predicted values of the latent representation of the future time sample, $\hat{z}[t+n]$, at the encoder, rather than the decoder, and is packaged into a bitstream and transmitted to the decoder. In some alternative embodiments, the signal data of the current time sample is not transformed into a latent representation for processing by the inference module. That is, the prediction may be carried out using the signal data itself rather than a latent representation, e.g. to predict values of $\hat{S}[t+n]$ using $S[t]$.

Although the example of Figure 7 shows the inference module comprised in the encoder, in alternative embodiments the inference module may be comprised in the decoder, and/or in an intermediate entity in the transmission path between the encoder and the decoder. As such, the prediction of future values of signals may be performed at one or more of the encoder, the intermediate entity and the decoder.

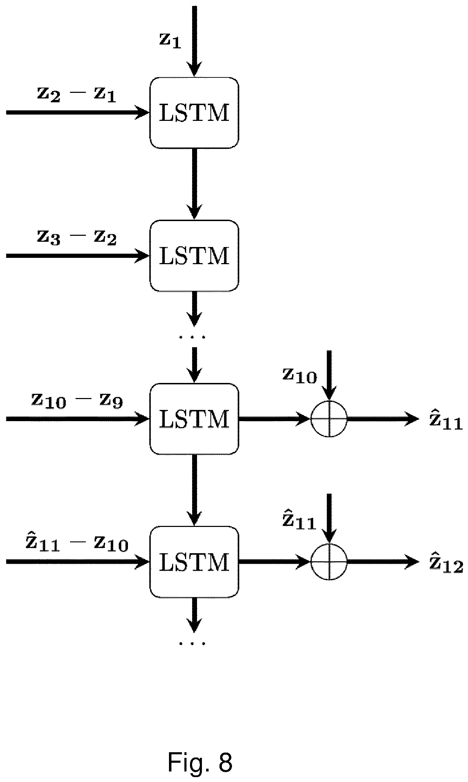

An example of the inference module of Figure 7 is shown in more detail in Figure 8, which depicts an LSTM-based architecture for predicting latent representation $\hat{z}[12]$ (i.e. corresponding to t = 12) from latent representations $z[1]$ to $z[10]$. That is, the example architecture shown in Figure 8 is trained to take a sequence of latent representation vectors and predict the latent representation vector of two time instances in the future, i.e. from $z[t]$ derive $\hat{z}[t+2]$, using LSTM units. In this example, ten latent representations are used to derive the prediction: $z[1]$ to $z[10]$ with $t = 10$ representing the current time instant and $t = 1..9$ representing previous time instances of the input signal.

The inference module first predicts $\hat{z}[11]$ and then uses this to predict $\hat{z}[12]$. The predicted values of $\hat{z}[12]$ are outputted and may be binarized and transmitted instead of binarizing and transmitting the values of $z[10]$ (i.e. the latent representation values of the current time sample). That is, the values of $z[10]$ are replaced with the predicted values of $\hat{z}[12]$ for subsequent signal processing.

At the next time instant ($t = 11$), the actual values of $z[11]$ are available at the encoder (e.g. from actual signal data), and these values can replace the predicted values of $\hat{z}[11]$ in the prediction of $\hat{z}[13]$, thereby improving the accuracy of the prediction of $\hat{z}[13]$. This process is repeated for each time sample.

While the example shown in Figure 8 shows the prediction process using as an input ten time samples (the current time sample and nine previous time samples), the process can use different numbers of time samples in other examples. Additionally, while the example of Figure 8 shows the prediction of future values of latent representations, in other examples the prediction process can be applied directly to signal data (i.e. without the use of the latent representation). In such examples, values of $\hat{S}[t+n]$ are directly predicted, rather than the latent representation values $\hat{z}[t+n]$.

In embodiments, the inference module takes as an additional input auxiliary signals. Such auxiliary signals may include, but are not limited to, additional speech or image data, movement or vibration data, or other representations of signals that relate to current or future values of the signal of interest. Such auxiliary signals may further increase the accuracy of the prediction of future signal values. The configuration of the LSTM units allows for the use of such auxiliary signals without requiring bespoke or specific customisations to handle such signals.

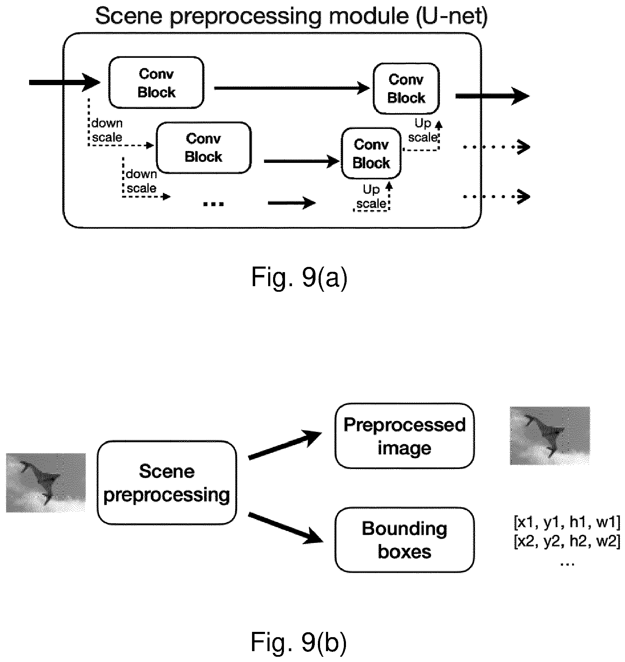

Figures 9(a) to 9(e) show schematically examples of the preprocessing function (or module) of Figure 7. Preprocessing may be performed in particular, though not exclusively, where the signal to be processed comprises image data. In embodiments, the preprocessing function comprises a CNN consisting of a stack of convolutional blocks (conv blocks). The convolutional blocks may include dilated convolutions, strided convolutions, up/down-scaling operations, skip connections and normalization operations (e.g. batch norm, instance norm). An example of a conv block is shown in Figure 4. The preprocessing function can also include a multi-resolution analysis of the image using a U-net architecture. This is shown in Figure 9(a). Such an architecture involves a series of downscaling operations and analyses using one or more conv blocks in each stage; the lower resolution output is merged with the higher resolution output using a series of upscaling operations. The output is presented at the highest resolution, or multiple outputs are presented at lower resolutions (shown with dotted arrows in Figure 9(a)). The output of this CNN comprises two components: a preprocessed image and a set of bounding boxes delineating the co-ordinates of scene elements or regions of interest. This is shown in Figure 9(b). In embodiments, the bounding boxes are vectors of the form [x, y, h, w] where x and y are the image coordinates of the upper left corner of the bounding box and h and w denote the height and width of the box, or any other equivalent representation of the bounding box, e.g. co-ordinates of upper left and lower right corners. In embodiments, the bounding box output can be augmented with additional scalars specifying probabilities for the presence of a particular scene element (e.g. human, animal, inanimate object). In some embodiments, the bounding box output involves a separate computational head that includes one or more densely connected layers (as shown in Figure 3(b)). The preprocessing function is fully learnable and its weights may be adjusted via gradient descent based on loss functions further downstream.

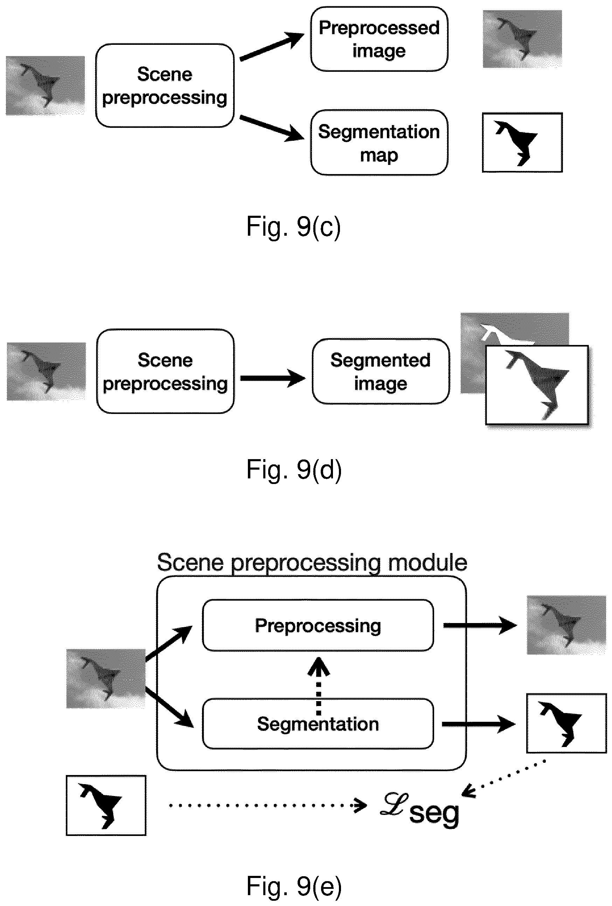

In embodiments, the output of the preprocessing function comprises a segmentation map instead of bounding boxes. This is shown in Figure 9(c). The segmentation map is obtained via binarization of the activation map using a tanh or sigmoid function, or variations of such non-linear functions. For automated segmentation into multiple semantic categories (e.g. humans, animals, inanimate objects), separate segmentation maps can be used, where each segmentation map is trained to designate a different one of the semantic categories.

In embodiments, instead of producing a preprocessed output and a segmentation map, regions of interest are masked out and the CNN produces a single output with multiple output channels. This is shown in Figure 9(d). Each of the output channels contains a portion of the image referring to a particular scene element or designated region of interest. If the image has been fully segmented into semantic categories, adding these outputs together yields a preprocessed version of the original image.

In embodiments, instead of being a single CNN, the preprocessing function is compartmentalised into an analysis CNN (configured to output a preprocessed image) and a separate segmentation model that is configured to output a segmentation map. This is shown in Figure 9(e). The segmentation model may comprise a trainable CNN or a pretrained segmentation model that is used for fine-tuning. In some embodiments, the segmentation model is a non-trainable segmentation model that is used as a drop-in component of the image processing system. The output of the segmentation model may also be used as a secondary input to the preprocessing module (shown with a dotted arrow in Figure 4(e)).

If the segmentation model is trainable, and segmentation data is available for training images, an additional segmentation loss function $L_{seg}$ is used to train the segmentation model. The segmentation loss function operates on the predicted segmentation X and a ground truth image segmentation Y. An example embodiment of this loss is the Dice loss:

$$\mathcal{L}_{seg} = \frac{2|X \cap Y|}{|X| + |Y|}$$

where $|X \cap Y|$ denotes the intersection of the two images (i.e. the number of pixels for which both models predict the same segmentation) and |X| and |Y| are the number of pixels in each of the images.

In embodiments, the input to the preprocessing module is a video with both spatial and temporal components, rather than a single image. In this case, in some embodiments, the 2D convolutions (operating on the horizontal and vertical image dimensions) are replaced by 3D convolutions (operating on the horizontal and vertical image dimensions as well as the time dimension). Alternatively, 2D convolutions are used in conjunction with LSTM or transformer modules to capture spatial and temporal dimensions separately.

Returning to Figure 7, the structure extraction and signal identity encoders may each comprise a CNN comprising a stack of convolutional blocks (as shown in Figure 4) and stacks of fully-connected neural networks of the type shown in Figure 3(b). Similarly to the preprocessing module and/or the inference module, the convolutional blocks of the structure extraction and signal identity encoders may include dilated convolutions, strided convolutions, up/down-scaling operations, and/or normalisation operations. In embodiments, the CNN includes a multi-resolution analysis of the image using a U-net architecture. The output of each CNN can be either a 2D or 3D feature block or a 1D vector of features. In the latter case, the last convolutional layer may be vectorised either by reshaping to 1D or alternatively by using a global pooling approach (e.g. global average pooling or global max pooling), in which case the dimensionality of the vector may correspond to the number of channels in the last convolutional layer. If the output is 1D, the vectorisation may be followed by one or more dense layers (as shown in Figure 3(b)).

The inputs to both CNNs (for the structure extraction encoder and the signal identity encoder) are the outputs of the preprocessing module, e.g. as discussed above. In short, the inputs comprise either a preprocessed image/video along with bounding box coordinates or segmentation maps, or a single masked preprocessed image/video. In the former case, if the secondary input is bounding boxes, they can be provided as additional inputs to the CNN, e.g., via a series of dense layers or via encoding the bounding boxes as additional input channels, where each input channel has a constant value that corresponds to the value of the bounding box entry. If the secondary input is a segmentation map, this can either be provided as separate input channels concatenated to the preprocessed inputs, or as a separate stream processed by a separate set of convolutional layers.

The purpose of the signal identity encoder (referred to herein as the 'first encoder') is to map a signal element, e.g. an element of a scene depicted in an image, such as a car or a drone or a person's unique structural characteristics, onto a low-dimensional vector. This mapping is designed to be invariant to changes in the configuration of the signal element between different images, e.g. irrelevant features of the input, such as viewpoint, background changes, lighting, etc. At the same time, this mapping is designed to be class-unique. That is, two different signal elements map onto two different latent representations unless both elements are representing near-identical objects (e.g. two cars of the same model or two photographs of the same person but with different clothes and glasses). The signal identity encoder can be equipped with its own differentiable loss function that enables the learning of these properties. An example of a loss function that simultaneously enables invariance (to viewpoint and other details) and identity is triplet loss. Let A be the anchor (current signal element), P (positive) another image of the same signal element e.g. from a different video frame, and N (negative) an image of a different signal element. It is assumed that multiple images or video frames are available for each unique signal element. Let id denote the operator that maps an input onto the latent representation, then the triplet loss is given by:

$$\mathcal{L}_{id} = max(||id(A) - id(P)|| - ||id(A) - id(P)|| + \alpha, 0),$$

where $\alpha$ is a hyperparameter that controls the margin between different identity embeddings.

The structure extraction encoder (referred to herein as the 'second encoder') aims to extract signal details (e.g. scene details) that are not captured by the signal identity encoder (e.g. the viewpoint or lighting with which a car is depicted in an input image). Taken together, signal identity and structure extraction provide sufficient details for an accurate rendering of the structural aspects of the original signal content.

In a first embodiment, the structure extraction encoder (also referred to as a 'landmark detection module') is differentiable, and trainable based on suitable training data. Such data can come in form of additional landmark data represented by a vector L and tagged by human observers. Let $\hat{L}$ be the landmarks predicted by the model, then a simple measure of their discrepancy with the ground truth is the Lp loss:

$$\mathcal{L}_{structure} = \left( \sum_i |L_i - \hat{L}_i|^p \right)^{1/p}$$

with L1 loss (p=1) and L2 loss (p=2) being popular special cases.

In a second embodiment, the structure extraction encoder comprises a pretrained landmark detector that detects pre-defined landmarks that have semantic significance (e.g. wheels of a car, doors, trunk) and provides their co-ordinates in an image. This detector can be either a pre-existing landmark detection module that can be used as a drop-in component in the model or a trainable (or fine-tunable) landmark detection model. For training, at least one of the signal identity encoder and the structure extraction encoder is differentiable (even if they are not being trained) in order to allow for the end-to-end training of the overall model. If the encoders are both non-differentiable, the model components can only be trained each using their own loss functions.

In a third embodiment, representative signal data (e.g. video data) from a target application domain is available and the structure extraction and signal identity encoders are trained using this data in an unsupervised manner, e.g. without the use of annotations for landmarks or labels being available within the training data. This is achieved by training a first, compact, structure extractor over a large amount of signals from the target application domain, e.g. surveillance videos, conversational videos, industrial monitoring videos, or specific speech signals of interest. This is then used to derive a signal identity encoder that is on one hand specific for the domain, but on the other hand not overly specific to the exact monitoring environment (e.g. exact surveillance scene, or exact speaker, or exact industrial monitoring scene of interest). This can also be coupled with a second, higher-dimensional, structure extractor, e.g. the structure extraction encoder, which is specific to the exact monitoring environment, or conversational speaker of interest, and is trained on specific signal content corresponding to such and not on generic application domain content, in contrast with the compact structure extractor.

The combination of the two encoders (signal identity and structure extraction) can produce a domain-specific compact representation of the content of the signal (or optionally a region of interest of the signal). Such a compact representation can optionally be made to be even more specific to the exact monitoring environment of interest, or speaker of interest. In this context of unsupervised learning, a training embodiment of the signal identity encoder comprises an autoencoder that is trained to represent the input large amount of signals with a very compact representation in the latent low-dimensional space of the autoencoder. The higher-dimensional structure extraction encoder is also an autoencoder that is trained in a second stage by considering specific subsets of signals corresponding to specific application contexts, e.g. videos of specific objects, specific scenes, or specific people of interest. These specific subsets of data are used in training iterations to train the higher-dimensional structure extractor and, together, the compact and the higher-dimensional structure extractors achieve two things: (i) the compact structure extractor learns the generic structural characteristics of the domain; (ii) the higher-dimensional structure extractor overfits to the specific visual or audio structure or object or person of interest and learns the signal representation of that specific item based on the training data. For both autoencoders, no labels or annotations are required to be available in the training data, as the autoencoders are trained by using loss functions that represent the reconstruction error in the training data, or the loss of structure from the autoencoder reconstruction, or by using generative adversarial losses, where a discriminator neural network is concurrently trained to distinguish between real training data and reconstructed training data from the autoencoders and the classification error of this distinction is used in the backpropagation-based training process of the autoencoders. If the amount of training data available is insufficient, data augmentation techniques can be used, whereby additional artificial structures are created by geometric transformations or fusion of multiple inputs together to create new augmented inputs to be used in training. Other regularization techniques, such as spectral renormalization and dropout, may also be selectively applied in order to stabilize the training of the encoders.

In embodiments, the outputs of the structure extraction and/or scene identity encoders are fused together by the fusion module (shown in Figure 7), and are optionally compacted using linear compaction techniques, such as principal components analysis, or non-linear compaction techniques such as kernel principal components or a series of perceptron layers. This produces the latent representation z[t] of the input signal for a time instant t.

The signal generator function shown in Figure 7 comprises a trained ANN that receives the compacted output of the inference module, and expands it to the final dimensions of the reconstructed signal. This is achieved with a series of convolutional and upscaling layers, optionally including regularization via spectral normalization. In embodiments, the structure of these layers follows adaptive instance normalization (AdaIN). In other embodiments, the structure of the layers follows the structure shown in Figure 4, with the inclusion of diluted convolutions and spectral renormalization. The reconstruction losses used as a loss function for the training of the signal generator function may include the calculation of content loss functions such as VGG. Additionally or alternatively, the reconstruction losses may include other distortion calculations in latent spaces by projecting the output of the signal generator into a latent space of a deep neural network, e.g. for structure extraction and object detection. In such embodiments, the difference in the last 1-3 layers between the network output when ingesting the input signal and when ingesting the reconstructed signal from the signal generator is calculated.

The signal processing system shown in Figure 7 may comprise more, fewer and/or different components in alternative embodiments. In embodiments, the system is end-to-end differentiable and can be trained with all of the components in place or in the absence of one or more components.

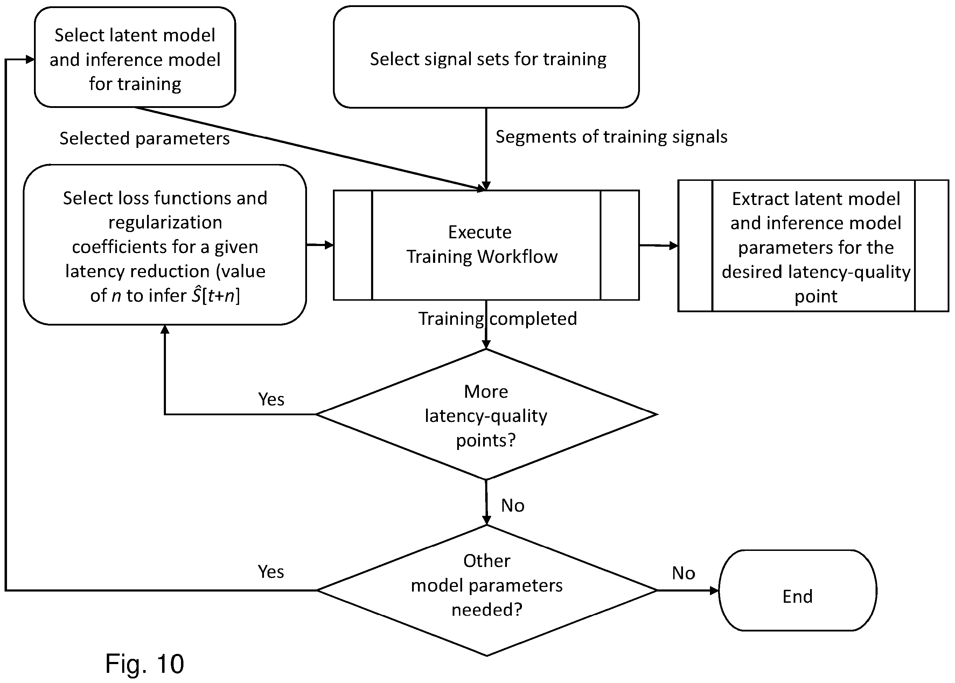

Figure 10 shows schematically a training process for the components, functions and encoders described herein. In Figure 10, the 'training workflow' corresponds to the embodiments described previously for supervised or unsupervised training of the encoders, inference module, and signal generator. The 'latent model and inference model architecture to train with' in Figure 10 refers to the selection of the specific training embodiment and its corresponding parameters from the training embodiments described previously. The 'signal sets to train with' in Figure 10 are selected signal samples to use for training and can correspond to image, video, speech, or other types of signal. The 'loss functions and regularization coefficients' referred to in Figure 10 correspond to the set of loss functions and the coefficients to combine with them when calculating the total loss function to use for back-propagation with stochastic gradient descent. In addition to the examples of loss functions previously described, other possible losses include, but are not limited to, variational autoencoder and generative adversarial network-based losses, and edge/gradient losses which may be calculated after applying a transformation on the input and reconstructed signals.

After training has been completed for a number of iterations (epochs) on the training data, the latent model and/or inference model parameters are extracted and can be used for prediction on new signals. Additionally, the system can repeat the training process for more latency-quality points, e.g. by setting different targets for the future time step (i.e. the value of *n,* as described with reference to Figures 1 and 7) that is targeted, in conjunction with an assessment of the achieved quality of the signal prediction when using the trained models for new signals. The overall training process may be repeated for new latent model architectures and/or inference model architectures, or to enable prediction using the actual signal values instead of the latent representation values. When sufficient numbers of models and quality-latency trade-offs have been explored, the overall process can be terminated (as shown in Figure 10) or can be periodically repeated in whole or in part in order to re-train or fine-tune some or all of the existing models, e.g. when encountering new signal types or ranges of signal representations that may be encountered for the first time.

In embodiments, training data includes data from a specific application domain, e.g. industrial monitoring, video game streaming, video conferencing, etc. The application domain corresponds to the domain expected during deployment of the signal processing system. As such, the training dataset includes representative elements of the structure or type of the input signals that are expected during deployment.

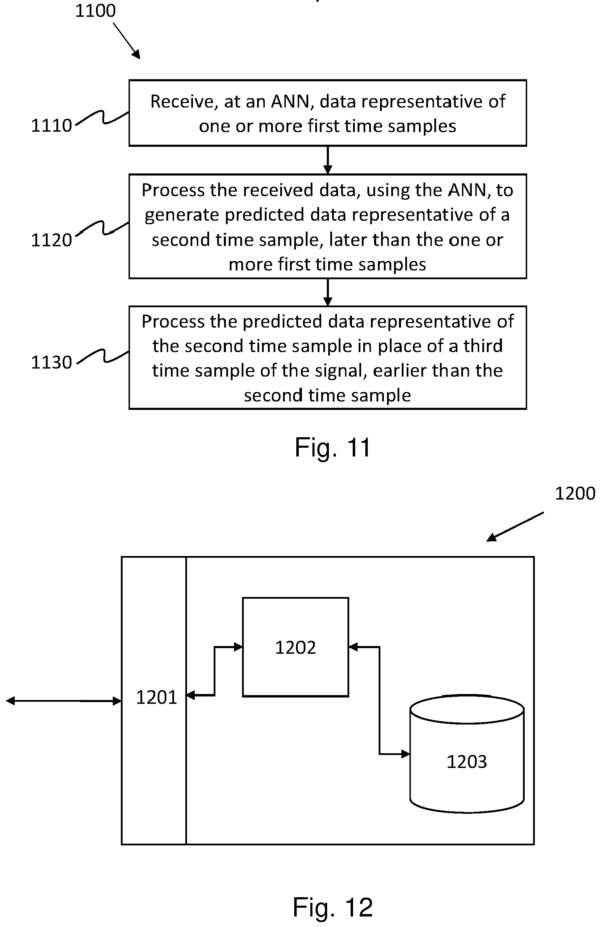

Figure 11 shows a method 1100 for processing a time-varying signal in a signal processing system. The signal comprises a sequence of time samples. The system comprises an ANN, e.g. comprising a network of interconnected learnable weights. The method 1100 may be performed by a computing device, according to embodiments. The method 1100 may be performed at least in part by hardware and/or software. In embodiments, the method 1100 is performed at least in part by an encoder. Such an encoder may be operable to send data to one or more decoders, e.g. via a wireless network, and/or to store data in a storage medium. In alternative embodiments, the method 1100 is performed at least in part by a decoder.

At item 1110, data representative of one or more first time samples of the signal is received at the ANN. In embodiments, the data representative of the one or more first time samples of the signal is received from an encoder device. In alternative embodiments, the data is received from storage, from an upstream signal processing entity, from one or more sensors, etc.

At item 1120, the data representative of one or more first time samples of the signal is processed using the ANN to generate predicted data representative of a second time sample of the signal. The second time sample is later in the sequence of time samples than the one or more first time samples. The ANN is trained to predict data representative of time samples of signals based on data representative of earlier time samples of the signals. Processing using the ANN comprises applying the trained weights of the ANN to the input data.

At item 1130, the predicted data representative of the second time sample is processed by the signal processing system in place of a third time sample of the signal. The third time sample is earlier in the sequence of time samples than the second time sample.

In embodiments, processing the predicted data representative of the second time sample of the signal comprises encoding, at an encoder device, the predicted data representative of the second time sample in place of the third time sample of the signal.

In embodiments, processing the predicted data representative of the second time sample of the signal comprises transmitting, to a decoder device, the predicted data representative of the second time sample in place of the third time sample of the signal.

In embodiments, processing the predicted data representative of the second time sample of the signal comprises decoding, at a decoder device, the predicted data representative of the second time sample in place of the third time of the signal.

In embodiments, processing the received data using the artificial neural network is based on auxiliary information derived from one or more of: audio data, data representing motion and/or vibration in a region where the signal is captured, and data indicating objects and/or structures represented in the signal.

In embodiments, the one or more first time samples includes the third time sample. In alternative embodiments, the one or more first time samples does not include the third time sample.

In embodiments, the signal comprises a video. In some such embodiments, the sequence of time samples of the signal comprises a set (or sequence) of images.

In embodiments, the ANN comprises a recurrent neural network. In embodiments, the recurrent neural network includes at least one long short-term memory, LSTM, unit. In embodiments, the ANN comprises a transformer neural network including an attention function.

In embodiments, the predicted data comprises a predicted value of a latent representation of the second time sample of the signal. The latent representation comprises a set of signal features representative of the second time sample of the signal. In some such embodiments, the ANN is trained to predict values of latent representations of time samples of signals based on values of latent representations of earlier time samples of the signals. In embodiments, the method 1100 comprises generating a prediction of the second time sample of the signal using the predicted value of the latent representation output by the ANN.

In embodiments, the method 1100 comprises receiving signal data of the one or more first time samples of the signal. The signal data of the one or more first time samples is transformed into latent representations of the one or more first time samples. In such embodiments, the latent representations of the one or more first time samples is inputted to the ANN.

In embodiments, for each of the one or more first time samples of the signal, transforming the signal data into the latent representation comprises first processing the signal data at a first encoder to generate a first data structure representative of the time sample of the signal, and second processing the signal data at a second encoder to generate a second data structure representative of the time sample of the signal. For each of the one or more first time samples of the signal, the latent representation comprises the first data structure and the second data structure.

The first data structure comprises a signal element identifier identifying at least one signal element included in the time sample of the signal. The signal element identifier is invariant to changes in the configuration of the at least one signal element between different time samples that include the at least one signal element. The second data structure comprises values indicating the configuration of the at least one signal element in the time sample of the signal.

In embodiments, the first encoder comprises a convolutional neural network that uses a differentiable loss function. In embodiments, the second encoder comprises a convolutional neural network configured to output a vector comprising the values indicating the configuration of the at least one signal element.

In embodiments, the method 1100 comprises identifying (e.g. selecting) the second time sample from the sequence of time samples of the signal based on a received latency characteristic of the signal processing system. Such a latency characteristic may indicate the end-to-end latency of the signal processing system, for example.

In embodiments, the method 1100 comprises receiving signal data of the second time sample of the signal, and processing, using the ANN, the signal data of the second time sample of the signal in place of the predicted data representative of the second time sample of the signal, to obtain predicted data representative of a fourth time sample of the signal. The fourth time sample is later in the sequence of time samples than the second time sample.

Embodiments of the disclosure include the methods described above performed on a computing device, such as the computing device 1200 shown in Figure 12. The computing device 1200 comprises a data interface 1201, through which data can be sent or received, for example over a network. The computing device 1200 further comprises a processor 1202 in communication with the data interface 1201, and memory 1203 in communication with the processor 1202. In this way, the computing device 1200 can receive data, such as signal data, image data, video data, or various data structures, via the data interface 1201, and the processor 1202 can store the received data in the memory 1203, and process it so as to perform the methods of described herein, including processing signal data.

Each device, module, component, machine or function as described in relation to any of the examples described herein may comprise a processor and/or processing system or may be comprised in apparatus comprising a processor and/or processing system. One or more aspects of the embodiments described herein comprise processes performed by apparatus. In some examples, the apparatus comprises one or more processing systems or processors configured to carry out these processes. In this regard, embodiments may be implemented at least in part by computer software stored in (non-transitory) memory and executable by the processor, or by hardware, or by a combination of tangibly stored software and hardware (and tangibly stored firmware). Embodiments also extend to computer programs, particularly computer programs on or in a carrier, adapted for putting the above described embodiments into practice. The program may be in the form of non-transitory source code, object code, or in any other non-transitory form suitable for use in the implementation of processes according to embodiments. The carrier may be any entity or device capable of carrying the program, such as a RAM, a ROM, or an optical memory device, etc.

The present disclosure also provides a method to reduce and/or compensate for the end-to-end latency in a signal processing and transmission system, the system comprising: an encoder part, a transmission part, and a decoder part, where each part of the system is configured to handle a time-varying signal $S$ and the signal containing a single or a multitude of values at every time instant $t$ that are denoted by $S[t]$. The method comprises the following steps: (i) inferring future value(s) of the signal at time $t+n$: $\hat{S}[t+n]$, $n>0$ using only previous or current signal values ($S[t']$, $0 \leq t' \leq t$) and a signal-adaptive inference method; and (ii) at time $t$ using the inferred value(s) $\hat{S}[t+n]$ instead of $S[t]$ for any signal processing and transmission, thereby using the inferred values of the signal at $n$ time points in the future instead of the values of the signal at time $t$, in order to compensate for the encoding, transmission and decoding latency of the aforementioned system.

In embodiments, the inference method for $\hat{S}[t+n]$ is carried out at either the encoder part, or at an intermediary point in the transmission part, or at the decoder part of the system.

In embodiments, the inference is carried out in a compact latent representation of the input signal and a reconstruction method is used to convert the inferred values of the latent representation to the inferred signal value(s) $\hat{S}[t+n]$.

In embodiments, the inference method is carried out using a recurrent neural network or a neural network with an attention module comprising several layers of interconnected neurons combined together to infer future values of the latent representation from a set of past values that are used to reconstruct the inferred signal value(s) $\hat{S}[t+n]$.

In embodiments, the utilized latent representation of the signal is a compact representation of the signal obtained using: (i) a preprocessing component configured to select one or more regions of interest of the input signal data; (ii) a structure extraction encoder configured to extract all signal-specific details from the input signal region and represent them into a compact format; and (iii) a signal uniqueness encoder configured to obtain a compact signal descriptor for the input signal region that represents the generic attributes of the type of signal under consideration. The outputs of the structure extraction and signal uniqueness encoders may be fused together. In embodiments, a generator component is configured to reconstruct the signal by receiving the fused outputs of the structure extraction and signal uniqueness encoders, wherein the generator component is configured to synthesize a rendering of the regions of interest resembling the structure and shapes present in the input signal regions of interest, but not their exact structure in the signal waveform or their exact semantics in the signal representation.

In embodiments, the structure extraction encoder component is a convolutional neural network, which ingests the input area of interest and outputs a vector that represents in a compact manner the structurally-salient features of the input area of interest.

In embodiments, the signal uniqueness encoder is a neural network that ingests the input area of interest and outputs a compact identifier representing the area's generic structural characteristics in comparison to other areas of any input image or video that has been passed through the system.

In embodiments, the signal generator component is a convolutional neural network that uses as input: (i) the compact identifier output from the signal uniqueness encoder; and (ii) the compact representation output from the structure extraction encoder.

In embodiments, the neural network components involved are trained based on representative input signals and the use of back propagation with stochastic gradient descent that minimizes one or more of the following loss functions: generative adversarial neural network losses, loss functions corresponding to mathematical norms of the signal reconstruction error from the inference in the compact latent representation, structural losses and/or gradients in a signal transform space between the input and the reconstructed signals, and losses combining a variational autoencoder reconstruction between input and reconstructed signals.

In embodiments, auxiliary information is used as additional input to the inference method. Such auxiliary information may be from one or more of the following sources; audio signals, signals representing motion or vibration in the region where the signal is captured, or signals representing object or structure information within the signal.

In embodiments, the signal of interest is an image or a video signal or a point cloud signal comprising multiple pixel values at each time instant t, with the values changing for each time instant.

In embodiments, e.g. when the method is performed at the encoder part of the system, the inference of $\hat{S}[t+n]$ is updated for each time instant $t+n$ as soon as actual signal information is available at the encoder part, i.e. the actual signal value(s) $S[t+n]$ become available, and such actual signal values are then used in subsequent inference of future time samples of the signal.

In embodiments, the time instant $t+n$ used for the inference is adjusted based on auxiliary data indicating the end-to-end system latency, in order to minimize the weighted combination of the estimated distortion from the error of the inference and the latency reduction that can be achieved by this inference.

In embodiments, the training to optimize the inference method can be repeated with new real data and updates for the encoder, inference and/or generator parts can be derived to be used during inference.

In embodiments, artificial neural networks are trained based on data, allowing for the updating of the learned neural prediction in the compact latent representation to occur in as frequent intervals as needed by each application use case. That is, the trained architectures for prediction can be retrained or fine-tuned in order to create multiple variants to use that are updated based on new signal statistics or are optimised for different latency reduction operational points.

While the present disclosure has been described and illustrated with reference to particular embodiments, it will be appreciated by those of ordinary skill in the art that the disclosure lends itself to many different variations not specifically illustrated herein.

In embodiments described above, the first and second encoders comprise separate neural networks. In alternative embodiments, the first and second encoders correspond to a single neural network having the functionalities of both encoders. In embodiments described above, the first and second encoders comprise neural networks such as CNNs. In alternative embodiments, one or both of the first and second encoders does not comprise a neural network. Similarly, in some embodiments, the preprocessing function, inference module and/or the signal generator function do not comprise neural networks. Such functions and/or encoders may comprise hard-coded algorithms, for example.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the disclosure that are described as preferable, advantageous, convenient or the like are optional and do not limit the scope of the independent claims. Moreover, it is to be understood that such optional integers or features, whilst of possible benefit in some embodiments of the disclosure, may not be desirable, and may therefore be absent, in other embodiments.

## Claims

1. A method for processing a time-varying signal in a signal processing system to compensate for latency, the system comprising an artificial neural network, and the signal comprising a sequence of time samples, the method comprising:

   receiving, at the artificial neural network, data representative of one or more first time samples of the signal;
   processing the data representative of one or more first time samples of the signal using the artificial neural network to generate predicted data representative of a second time sample of the signal, the second time sample being later in the sequence of time samples than the one or more first time samples, wherein the artificial neural network is trained to predict data representative of time samples of signals based on data representative of earlier time samples of the signals; and
   processing, by the signal processing system, the predicted data representative of the second time sample in place of a third time sample of the signal, the third time sample being earlier in the sequence of time samples than the second time sample.

2. A method according to claim 1, wherein the processing the predicted data representative of the second time sample of the signal comprises encoding, at an encoder device, the predicted data in place of the third time sample of the signal.

3. A method according to any preceding claim, wherein the processing the predicted data representative of the second time sample of the signal comprises transmitting, to a decoder device, the predicted data in place of the third time sample of the signal.

4. A method according to any preceding claim, wherein the processing the predicted data representative of the second time sample of the signal comprises decoding, at a decoder device, the predicted data in place of the third time of the signal.

5. A method according to claim 3 or claim 4, wherein the data representative of the one or more first time samples of the signal is received from an encoder device.

6. A method according to any preceding claim, wherein the one or more first time samples includes the third time sample.

7. A method according to any preceding claim, wherein the signal comprises a video, and wherein the sequence of time samples of the signal comprises a set of images.

8. A method according to any preceding claim, wherein:

wherein the artificial neural network comprises a recurrent neural network, the recurrent neural network including at least one long short-term memory unit, or
wherein the artificial neural network comprises a transformer neural network including an attention function.

9. A method according to any preceding claim,

wherein the predicted data comprises a predicted value of a latent representation of the second time sample of the signal, the latent representation comprising a set of signal features representative of the second time sample of the signal,
wherein the artificial neural network is trained to predict values of latent representations of time samples of signals based on values of latent representations of earlier time samples of the signals.

10. A method according to any preceding claim, comprising:

receiving signal data of the one or more first time samples of the signal;
transforming the signal data of the one or more first time samples into latent representations of the one or more first time samples, a latent representation of a given time sample comprising a set of signal features representative of the time sample; and
inputting the latent representations of the one or more first time samples to the artificial neural network.

11. A method according to claim 10,

wherein, for each of the one or more first time samples of the signal, transforming the signal data into the latent representation comprises:

first processing the signal data at a first encoder to generate a first data structure representative of the time sample of the signal, the first data structure comprising a signal element identifier identifying at least one signal element included in the time sample of the signal, wherein the signal element identifier is invariant to changes in the configuration of the at least one signal element between different time samples that include the at least one signal element; and
second processing the signal data at a second encoder to generate a second data structure representative of the time sample of the signal, the second data structure comprising values indicating the configuration of the at least one signal element in the time sample of the signal, and

wherein, for each of the one or more first time samples of the signal, the latent representation comprises the first data structure and the second data structure.

12. A method according to any preceding claim, the method comprising identifying the second time sample from the sequence of time samples of the signal based on a received latency characteristic of the signal processing system.

**13.** A method according to any preceding claim, the method comprising:

receiving signal data of the second time sample of the signal; and
processing, using the artificial neural network, the signal data of the second time sample of the signal in place of the predicted data representative of the second time sample of the signal, to obtain predicted data representative of a fourth time sample of the signal, the fourth time sample being later in the sequence of time samples than the second time sample.

**14.** A computing device comprising:

a processor; and
a memory,
wherein the computing device is arranged to perform, using the processor, a method according to any of claims 1 to 13.

**15.** A computer program product arranged, when executed on a computing device comprising a processor and memory, to perform a method according to any of claims 1 to 13.

EP 4 224 860 A1

100

Input
Signal
$S[t]$

Transmission

If inference is applied at Encoder:
Encoded version of inferred
signal $\hat{S}[t+n]$

If inference is applied at Encoder
or Intermediary Point:
Encoded version of inferred
signal $\hat{S}[t+n]$

Decoded version
of inferred
signal $\hat{S}[t+n]$

| Encoder 101 | → | Intermediary Point in Transmission 102 | → | Decoder 103 |

Optional
Auxiliary
Signals

Optional
Auxiliary
Signals

Optional
Auxiliary
Signals

Fig. 1

```
┌──────────────┐        ┌──────────────────┐        ┌──────────────┐
│    Input     │        │                  │        │   Inferred   │
│    Signal    │ ─────▶ │ Inference Method │ ─────▶ │    Signal    │
│    $S[t]$    │        │                  │        │ $\hat{S}[t+n]$ │
└──────────────┘        └──────────────────┘        └──────────────┘
```

Fig. 2

Fig. 3(a)

$$g(\Theta_{10}{}^{1}x_0 + \Theta_{11}{}^{1}x_1 + \Theta_{12}{}^{1}x_2 + \Theta_{13}{}^{1}x_3)$$

$\Theta_{13}^{1}$ means:

1 (superscript) - mapping from layer 1
1 - mapping to node 1 in layer 2 (L+1)
3 - mapping from node 3 in layer 1 (L)

Layer 1          Layer 2          Layer 3

$$a_1^{(2)} = g(\Theta_{10}^{(1)}x_0 + \Theta_{11}^{(1)}x_1 + \Theta_{12}^{(1)}x_2 + \Theta_{13}^{(1)}x_3)$$
$$a_2^{(2)} = g(\Theta_{20}^{(1)}x_0 + \Theta_{21}^{(1)}x_1 + \Theta_{22}^{(1)}x_2 + \Theta_{23}^{(1)}x_3)$$
$$a_3^{(2)} = g(\Theta_{30}^{(1)}x_0 + \Theta_{31}^{(1)}x_1 + \Theta_{32}^{(1)}x_2 + \Theta_{33}^{(1)}x_3)$$
$$h_\Theta(x) = a_1^{(3)} = g(\Theta_{10}^{(2)}a_0^{(2)} + \Theta_{11}^{(2)}a_1^{(2)} + \Theta_{12}^{(2)}a_2^{(2)} + \Theta_{13}^{(2)}a_3^{(2)})$$

Fig. 3(b)

Fig. 3(c)

Fig. 4

Fig. 5

Fig. 6

Neural Network Layer

Pointwise Operation

Vector Transfer

Concatenate

Copy

Fig. 7

$$z_1$$

$$z_2 - z_1 \rightarrow \boxed{\text{LSTM}}$$

$$z_3 - z_2 \rightarrow \boxed{\text{LSTM}}$$

. . .

$$z_{10} - z_9 \rightarrow \boxed{\text{LSTM}} \quad z_{10} \quad \oplus \rightarrow \hat{z}_{11}$$

$$\hat{z}_{11} - z_{10} \rightarrow \boxed{\text{LSTM}} \quad \hat{z}_{11} \quad \oplus \rightarrow \hat{z}_{12}$$

. . .

Fig. 8

Scene preprocessing module (U-net)

Fig. 9(a)

Fig. 9(b)

Fig. 9(c)

Fig. 9(d)

Fig. 9(e)

```
┌─────────────────────┐          ┌─────────────────────────────┐
│   Select latent model│          │                             │
│  and inference model │          │ Select signal sets for training│
│     for training     │          │                             │
└─────────────────────┘          └─────────────────────────────┘
```

Selected parameters                    Segments of training signals

```
┌─────────────────────┐   ┌──┬─────────────────┬──┐   ┌─┬─────────────────────┬─┐
│ Select loss functions│   │  │                 │  │   │ │ Extract latent model│ │
│         and          │   │  │                 │  │   │ │ and inference model │ │
│    regularization    │──▶│  │     Execute     │  │──▶│ │  parameters for the │ │
│ coefficients for a given│ │  │ Training Workflow│  │   │ │desired latency-quality│ │
│ latency reduction (value│ │  │                 │  │   │ │        point        │ │
│  of n to infer Ŝ[t+n]│   │  │                 │  │   │ │                     │ │
└─────────────────────┘   └──┴─────────────────┴──┘   └─┴─────────────────────┴─┘
```

Training completed

```
                        ╱──────────────╲
             Yes       ╱     More        ╲
        ◀─────────────◀   latency-quality  ▶
                        ╲     points?     ╱
                         ╲──────────────╱
                                │
                                │ No
                                ▼
                        ╱──────────────╲
             Yes       ╱     Other       ╲        No      ┌──────────┐
        ◀─────────────◀ model parameters   ▶─────────────▶│   End    │
                        ╲    needed?      ╱                └──────────┘
                         ╲──────────────╱
```

Fig. 10

1100

1110 — Receive, at an ANN, data representative of one or more first time samples

1120 — Process the received data, using the ANN, to generate predicted data representative of a second time sample, later than the one or more first time samples

1130 — Process the predicted data representative of the second time sample in place of a third time sample of the signal, earlier than the second time sample

Fig. 11

1200

1201

1202

1203

Fig. 12

**EUROPEAN SEARCH REPORT**

Europäisches Patentamt
European Patent Office
Office européen des brevets

| | Application Number |
|---|---|
| | **EP 22 17 9065** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DOULAMIS ANASTASIOS ET AL: "Content-based Video Adaptation in Low/Variable Bandwidth Communication Networks Using Adaptable Neural Network Structures", THE 2006 IEEE INTERNATIONAL JOINT CONFERENCE ON NEURAL NETWORK PROCEEDINGS, [Online] 30 October 2006 (2006-10-30), XP055980440, Retrieved from the Internet: URL:https://ieeexplore.ieee.org/stampPDF/getPDF.jsp?tp=&arnumber=1716655&ref=aHR0cHM6Ly9pZWVleHBsb3JlLmllZWUub3JnL2RvY3VtZW50LzE3MTY2NTU=> [retrieved on 2022-11-11] | 1-7,9-15 | INV. H04N19/42 H04N19/503 H04N19/85 G06N3/04 G06N3/08 |
| Y | * the whole document * | 8 | |
| Y | KIM NAYOUNG ET AL: "Long-Term Video Generation with Evolving Residual Video Frames", 2018 25TH IEEE INTERNATIONAL CONFERENCE ON IMAGE PROCESSING (ICIP), IEEE, 7 October 2018 (2018-10-07), pages 3578-3582, XP033454654, DOI: 10.1109/ICIP.2018.8451079 [retrieved on 2018-08-29] | 8 | |
| A | * abstract * * Sections 1 and 2 * | 1-7,9-15 | |
| A | LEE JUNG-KYUNG ET AL: "Deep Video Prediction Network-ased Inter-Frame Coding in HEVC", IEEE ACCESS, IEEE, USA, vol. 8, 8 May 2020 (2020-05-08), pages 95906-95917, XP011791138, DOI: 10.1109/ACCESS.2020.2993566 [retrieved on 2020-05-29] * abstract * * Sections I - III * | 1-15 | |

TECHNICAL FIELDS SEARCHED (IPC)

H04N
G06N

-/--

The present search report has been drawn up for all claims

| Place of search | Date of completion of the search | Examiner |
|---|---|---|
| Munich | 14 November 2022 | Baudino, A |

page 1 of 2

## EUROPEAN SEARCH REPORT

**Application Number**

EP 22 17 9065

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | PENGLEI GAO ET AL: "Generalised Image Outpainting with U-Transformer", ARXIV.ORG, CORNELL UNIVERSITY LIBRARY, 201 OLIN LIBRARY CORNELL UNIVERSITY ITHACA, NY 14853, 27 January 2022 (2022-01-27), XP091140367, | 8 | |
| A | * abstract * <br> * Sections 1 and 3 * <br> ----- | 1-7,9-15 | |
| | | | TECHNICAL FIELDS SEARCHED (IPC) |

The present search report has been drawn up for all claims

| Place of search | Date of completion of the search | Examiner |
|---|---|---|
| Munich | 14 November 2022 | Baudino, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2